# EUROPEAN PATENT SPECIFICATION

(11) **EP 1 693 432 B1**
(45) Date of publication and mention of the grant of the patent: **30.09.2009**
(21) Application number: 05021958.3
(22) Date of filing: 07.10.2005
(51) Int. Cl.: C10G 49/02, C10G 3/00

(54) **Vegetable oil hydroconversion process**
Hydrokonversionsverfahren für pflanzliches Öl
Procédé d'hydroconversion d'huile végétale

(30) Priority: 18.02.2005 BR 0500591
(43) Date of publication of application: 23.08.2006
(73) Proprietor: PETROLEO BRASILEIRO S.A. - PETROBRAS, Rio de Janeiro (BR)
(72) Inventor: Gomes, Jefferson Roberto, Rio de Janeiro RJ, CEP 22.251-060 (BR)
(74) Representative: advotec.

(56) References cited:
- US-A- 2 163 563
- US-A- 4 300 009
- US-A- 4 992 605
- US-A- 5 233 109
- US-A- 5 705 722
- TYSON, BOZELL, WALLACE, PETERSEN, MOENS: "Biomass Oil Analysis: Research Needs and Recommendations" June 2004 (2004-06), NATIONAL RENEWABLE ENERGY LABORATORY * pages 63-64 *
- SPATARU: "Is there a future for fellow grease as a fuel additive ?" RENDER, February 2001 (2001-02),
- SPATARU, MONNIER: "AGTANE (AGRICULTURAL CETANE): AN ECONOMICALLY VIABLE BIOENERGY PRODUCT FOR COMPRESSION IGNITED ENGINES" 5TH INTERNATIONAL BIOMASS CONFERENCE OF THE AMERICAS, 21 September 2001 (2001-09-21),
- J.SANTOS, I.SANTOS, A.SOUZA: "EFFECT OF HEATING AND COOLING ON RHEOLOGICAL PARAMETERS OF EDIBLE VEGETABLE OILS" JOURNAL OF FOOD ENGINEERING, vol. 67, 2005, pages 401-405,

## Description

### FIELD OF INVENTION

This invention belongs to the field of hydroconversion processes, more specifically, to the hydroconversion processes to obtain diesel oil from vegetable oils combined with oil.

### BASIS FOR THE INVENTION

Throughout Brazil, agriculture is an important motivating factor in promoting socioeconomic development, as well as contributing to improving environmental conditions world wide, which is being greatly affected by the economic activities of modem civilization, principally by the use of non-renewable fossil fuels in detriment to fuels derived from vegetable matter. In Brazil for some decades, ethanol, produced on a large scale, has been successfully used as a substitute for gasoline, however it wasn't possible, up to now, to implement a similar program for diesel.

Therefore, there is a great effort to make the use of what is known as "bio-diesel", trans fatty acids with alcohol (methanol or ethanol) viable. However the production of this fuel requires the development of simple, low cost technology in order for it to be used by small agricultural producers.

The main source of these fatty acids is vegetable oils, also called fatty acid tryglicerides. They are extracted directly from vegetable seeds by a pressing process and/or extraction with organic solvent. In addition to applications in the food industry, they are mainly used in the production of soaps, paints, lubricants and plastics.

The Brazilian fuel market is greatly dependent on the supply of diesel, due to the truck and bus fleets, the main means of transport for cargo and people. Therefore, the search for alternative sources has driven many areas of research, and renewable sources have been of particular interest, as they contribute towards improving the environment and may be an extra source of resources in some regions of the country.

Some work was carried out using the oils directly in diesel engines. The idea of using pure vegetable oils, or a mixture, directly in diesel engines has been around for a long time, Rudolph Diesel himself used peanut oil in one of his engines at the 1900 Paris Exposition. However long term engine testing showed that the conventional engine is not suitable for using this fuel, both in a pure form or mixed with mineral oil, as the engines used in the tests showed carbon deposit formation, ashes, fuel chamber wear and the formation of gum in the fuel lines, as cited by Recep Altin, Selim Çetinkaya, Hüseyin Serdar Yücesu - The potential of using vegetable oil as fuel for diesel engines. Energy Conversion and Management, 42, pp 529-538 , 2001.

Another important market that is also seeking to substitute diesel with a renewable source is Canada, as can be seen in the article by Mark Stumborg, Alwong, Ed Hogan - Hydroprocessed vegetable oils for diesel fuel improvement, Bioresource Technology, 56, pp. 13-18, 1996.

To convert vegetable oils directly into extra quality diesel, a hydrorefining technology was developed, based on known technology, using existing commercial catalysts. The vegetable oils used were: rape seed oil, soya oil and residual oil from cellulose production using pine trees (or any resinous plant). The oils used are low quality, i.e. they have not having been through any type of treatment, except filtering. The study resulted in the development of a new hydrotreatment process for pure vegetable oils, for production of a hydrocarbon flow with a high cetane number, as per G.N. da Rocha Filho, D. Brodzki and G. Djéga-Mariadassou - Formation of alkylcycloalkanes and alkylbenzenes during the catalytic hydrocracking of vegetable oils, Fuel, 72, pp. 543-549, 1993. Hydrocracking reactions are used for reducing the number of carbon atoms in the chain, hydrotreatment for removing oxygenated compounds and unsaturation hydrogenation for removing double bonds, for which were used NiMo and CoMo commercial gama alumina supported sulfided catalysts.

The diesel obtained amounts to 80% of the load processed, with good results in relation to the catalyst's useful life, however with a forecast of catalyst regeneration over the period. The product obtained has a cetane number varying between 55 and 90, with the production of subproducts: C₁ to C₅ gas, CO₂ and water. The liquid product is miscible in all proportions in the mineral diesel flow and, therefore, may be added to the refinery's diesel pool, improving the cetane number, but prejudicing the low temperature specifications of the final product.

Generally, the product contributes to improving emissions from diesel engines, this improvement being inversely proportional to the quality of the diesel fuel base, i.e. the worse the emissions caused by the diesel are, the better is the return by the addition of the generated product, mainly in the reduction of NOx and CO emissions.

The hydrorefining process (HDR), also known as hydroprocessing, consists of mixing oil fractions with hydrogen in the presence of a catalyst, which under determined operational conditions produces specified diesel. This process is gaining importance throughout the world and principally in Brazil, as despite being a catalytic process, under severe operational conditions (high temperatures and pressures) and which consumes hydrogen, a high production cost consumable, the advantages obtained with this refining technology outweigh the costs, allowing better use of heavy loads, improved product quality and environmental protection by removing pollutants such as sulfur and nitrogen. Therefore, resistance to the HDR process because of its high investment and operational costs, are outweighed by the benefits obtained.

Hydrotreatment (HDT) units, when used in more complex refining schemes, are intended to improve load quality, by eliminating the contaminants of subsequent processes. The product from the unit has essentially the same load distillation range, although there is secondary production of lighter products by hydrocracking. Typical loads of these units vary from the naphtha range up to heavy vacuum gasoil (GOP).

Some patent documents cover this area.

The hydrogenation of vegetable oils combined with mineral oil is mentioned in US patent 2.163.563, which processes vegetable oils mixed with a mineral oil flow in the presence of hydrogen at high pressure (50 to 500 atmospheres) and uses a reduced Ni alumina supported catalyst. The converted vegetable oil is separated by distillation and the mineral oil recycled. However this patent doesn't deal with the hydrotreatment of a combined oil and vegetable oil load by a HDT process.

US patent 4.300.009 describes the catalytic conversion of anabolites (substances formed in the anabolic process) such as resins, vegetable oils and fats in liquid hydrocarbons, in the presence of zeolites with an effective pore size greater than 5 Angstrom. The generated products have a boiling point in the gasoline range.

US patent 5.233.109 describes a synthetic crude oil produced by the catalytic cracking of a biomass material, such as vegetable or animal oil in the presence of a catalyst which is of alumina, with or without silica and/or a zeolitic component and/or rare earths and/or sodium oxide. The reaction takes place in the presence of a carrier gas that can be air, nitrogen, argon, hydrogen and a hydrocarbon obtained from oil refining.

US patent 5.705.722 describes a process to produce additives for diesel fuels with a high cetane number and serving as fuel ignition improvers. In the process, biomass containing a high proportion of unsaturated fatty acids, wood oils, animal fats and other mixtures is submitted to hydroprocessing, placing the load in contact with hydrogen gas in the presence of a hydroprocessing catalyst under hydroprocessing conditions, to obtain a product mixture. This mixture is then separated and fractioned to obtain a hydrocarbon product with a boiling point in the diesel range, and this product is a high cetane number additive. There is no mention in this document of the addition of oil hydrocarbons to the biomass load being hydroprocessed.

US patent 4.992.605 uses a hydrorefining process with a sulfided catalyst (NiMo and CoMo) in the presence of hydrogen (4 to 15 Mpa pressure) and temperature varying between 350°C and 450°C and processes pure vegetable oils such as rape seed, sunflower, soya, palm and wood oil, which is a residue from the wood pulp industry. The final objective is to obtain a flow with a high cetane number to be added to the refinery's diesel pool, however the low temperature specifications are prejudiced. This patent doesn't cover the mixing of a hydrocarbon with the vegetable oil in hydrorefining.

US patent 5.972.057 describes the transesterification of vegetable oils, principally oils used for frying, with methanol and ethanol, with the objective of producing a fuel similar to mineral diesel, however the process involves the consumption of an expensive reagent (alcohol) and the subproducts (glycerine, etc.) have to be separated in order not to damage the engine.

Therefore, despite the technological developments there is still the technical need of a process for the hydroconversion of vegetable oils in order to obtain diesel, in which a vegetable oil flow in a proportion between 1 and 75% in mass, combined at between 99% and 25% in mass with a hydrocarbon flow, is submitted to hydrotreatment under hydrotreatment conditions, the product flow with a boiling point in the diesel range has an improved cetane index and density less than that obtained by processing the usual hydrocarbon flows themselves, the same hydroconversion process being described and claimed in this request.

### INVENTION SUMMARY

In a broad manner, the invention process for vegetable oil hydroconversion includes hydrotreating a flow of vegetable oils or a mixture of such oils with natural fats in a proportion between 1 and 75% in mass combined at between 99% and 25% in mass to a hydrocarbon flow, hydrotreated in a hydrotreatment reactor, under hydrotreatment conditions, which involve an operating pressure of 4 MPa to 10Mpa, a catalytic bed average temperature between 320°C and 400°C, spatial speed of 0.5h⁻¹ to 2h⁻¹, and a NiMo or CoMo catalyst, the hydrogen load ratio varying from 200N I of hydrogen/load liter to 1000N I of hydrogen/load liter, obtaining a product with a boiling point in the diesel range with an improved cetane index, and a density less than that obtained by hydrotreatment of a pure hydrocarbon load.

Therefore, the invention provides a vegetable oil hydrotreatment process in which a proportion of 1 to 75% in mass of oils and/or natural fats, the rest being a mineral load, is hydrotreated under hydrotreatment conditions, in order to obtain diesel oil with an improved cetane index in relation to the hydrotreatment of mineral oil alone.

### BRIEF DESCRIPTION OF THE DRAWINGS

FIGURE 1 attached, is a process schematic flowchart of the invention.

FIGURE 2 attached, is a graph that illustrates the plugging temperature of a diesel fuel system for a heavy diesel (HD) by castor oil content and reaction temperature. Curve 1 represents the data for 360°C, while Curve 2 the data for 380°C.
FIGURE 3 attached, is a graph that illustrates the plugging temperature of a diesel fuel system for a REPLAN oil by vegetable oil content and reaction temperature. Curve 1 represents the data for 350°C in the presence of castor oil and soya oil as well as soya oil at 370°C, while Curve 2 the data for castor oil at 370°C.
FIGURE 4 attached, is a graph that illustrates the plugging temperature of a diesel fuel system for a light diesel (LD) by castor oil content and reaction temperature. Curve 1 represents the data for 340°C, while Curve 2 the data for 360°C.
FIGURE 5 attached, is a graph that illustrates the density variation of the product obtained from pure heavy diesel and mixed with castor oil. Curve 1 represents the data for heavy diesel. Curve 2 the data for heavy diesel plus 10% in mass of castor oil and Curve 3 the data for heavy diesel plus 30% in mass of castor oil.
FIGURE 6 attached, is a graph that illustrates the density variation of the product obtained from a pure REPLAN oil and mixed with different vegetable oils. Curve 1 represents the data for the pure REPLAN oil, Curve 2 the REPLAN oil plus 10% soya oil (SO), and Curve 3 the REPLAN oil plus 10% castor oil.
FIGURE 7 attached, is a graph that illustrates the density variation of a product obtained from light diesel, by the content in mass of castor oil and reaction temperature. Curve 1 represents the data for 340°C and Curve 2 the data for 360°C.
FIGURE 8 attached, is a graph that illustrates the stability of products obtained from a REPLAN oil by the content in mass of vegetable oil for different oils and different temperatures. Curve 1 represents the data for castor oil at 350°C, Curve 2 castor oil at 370°C, Curve 3 soya oil at 350°C and Curve 4 soya oil at 370°C.

### DETAILED DESCRIPTION OF THE PREFERRED MODEL

The coprocessing of vegetable oils mixed with mineral oil, in existing HDT units, is an alternative for incorporating a low added value flow to the refinery's diesel pool, not only for having a high cetane number but also for reducing the density, as normal paraffins have low density and the HDT process has limitations for attaining this specification with very aromatic loads (high LCO content).

Another important factor is the use of castor oil, which unlike other vegetable oils hydrocracks, producing C10 and C11 paraffins as well as C17 and C18 paraffins, therefore having lower density than other vegetable oils studied.

Another important factor is, that diluted with vegetable oil (VO) the industrial unit can operate at temperature ranges below 340°C, which is lower than the temperatures shown by process patents with pure VO.

Also highlighted is the improved plugging point for diesel oils used in Brazil, which is contrary to the results in existing patents, possibly because in countries with a colder climate, diesel oil is lighter than that used in tropical countries.

The hydrotreatment of vegetable oils in accordance with the invention includes, therefore, hydrotreatment under hydrotreatment conditions, of a mineral load with between 1 and 75% in mass of a vegetable oil or animal fat load.

The useful vegetable oils for the invention's process includes soya oil (Glycina max), castor oil (Ricinus communis), palm oil (Elaeis guineensis) and peanut oil (Arachis hypogaea). Among these, castor oil is the preferred.

The useful vegetable load for the process can be any vegetable or animal oil, without the need of purification, except for particulates, water and dissolved salts.

Castor oil is obtained from pressing the seeds produced by the plant Ricinus Communis, which is found in practically all tropical or subtropical countries, and can be propagated from seeds. The fundamental characteristic of the oil is its low variability, both in the quantity of oil from mature seeds and the composition of the obtained oil, the production of which varies between 45 and 49% per seed mass. Castor oil contains around 87 to 90% Ricinoleic Acid, 1% palmitic acid and 4.2% linoleic acid.

The most commonly used recovery process firstly presses the seeds followed by extraction with solvent and, when pressing is done at a high temperature, it is necessary to purify the oil by removing toxic proteins (ricin). The process efficiency is from 75 to 85%, 10 to 20% is retained in the pressed solid residue.

For purifying vegetable oil a centrifugal process is normally used for removing proteins in suspension (degumming process).

Soya oil is also the preferred vegetable load, principally aimed at recycling used oils from restaurants, for example.

The mineral loads used and their analysis is show in Table 1 below.

**TABLE 1**

| Loads | Dens. 20/4°C | R. I. 20°C | Viscosity. | | | N | S |
|---|---|---|---|---|---|---|---|
| | | | 20°C | 37.8°C | 50°C | ANTEK 7000 | R-X |
| | | | cSt | cSt | cSt | ppm | ppm |
| HD | 0.9075 | 1.505 | 55.71 | 22.62 | 13.79 | 1599 | 6349 |
| REPLAN | 0.8925 | 1.4998 | 12.93 | 7.057 | 4.992 | 1642 | 6234 |
| LD | | 1.472 | | | | 96.4 | 2590 |
| CO | 0.9593 | 1.479 | 245.4 | 84.26 | 18.99 | 31.22 | 7.65 |

Where: R.I. = Refraction Index , ASTM D 1218 and
ANTEK 7000 = Total Nitrogen Analysis, ASTM D 4629

The loads are selected in order to determine the crackability of the vegetable oil and to verify the synergic effects in relation to the other important process reactions, determining if any important diesel specification may not be obtained, due to the impact of the vegetable oil on the catalyst.

The useful mineral loads in the process are: heavy diesel (HD) which is the largest components of the refinery's pool; light diesel (LD), to verify the impact on the low temperature specifications and the REPLAN load. The REPLAN load is a mixture of a LCO flow and/or coking processes gasoil used in the REPLAN HDT unit and represents a typical load, at Petrobras, of a HDT unstables unit for city diesel production.

It is equally possible to combine vegetable oil and animal fat loads in any proportion.

The catalysts used in hydrotreatment (HDT) are basically metal oxides, totally or partially converted to y-alumina (y- Al₂O₃) supported sulfides (active phase). The conversion of the oxides to sulfides (sulfidation) is made in the hydrotreatment reactor itself. The active phase has the hydrogenolysis and hydrogenation processes. The support has the basic role of providing a specific high area, where the active components are found dispersed in the form of small particles. Additionally, the support provides mechanical resistance and thermal stability, impeding sintering (active phase agglomeration). The y-alumina has a specific area between 200 and 400 m²/g, pore volume of from 0.5 to 1.0 cm³/g and acidity classified as from weak to moderate. There is a synergic effect between the metal sulfides of groups VI-B (Mo and W) and VIII (Co and Ni), to various reactions involved in the hydrotreatment process, so that the activity of the catalysts containing sulfides, of both groups, is much greater than the activity of the individual sulfides. Therefore, the mixed sulfides are normally used as the active phase (Co-Mo, Ni-Mo, Ni-W, Co-W), as the optimum relationship between the Group VIII metal and the Group VI-B metal is in the range 0.33 to 0.54.

In the diesel production hydrotreatment process, the reaction occurs in the presence of hydrogen at high pressure, in the operation range of 4MPa to 10MPa, preferably 5MPa to 8MPa. The average temperature of the catalytic bed can vary between 320°C and 400°C, preferably between 340°C and 380°C, with spatial velocity varying from 0.5h⁻¹ to 2h⁻¹, preferably 0.8h⁻¹ to 1.2h⁻¹. The catalytic bed may be divided into two or more stages with an injection of cold nitrogen between stages for temperature control, hydrogen load ratio varying from 200N I of hydrogen/load liter to 1000N I of hydrogen/load liter.

The hydrotreatment reaction experimental conditions are determined from the typical conditions of a HDT unstables unit, in this way the variables: pressure (9MPa), LHSV (1 h⁻¹) and the H₂/load relationship (800 Nl/load liter) are maintained constant. The temperatures are adjusted in accordance with the load's refractivity, that is loads with a higher boiling point, or LCO content, are tested at higher temperatures. The tests are planned in order that there is always, for the same experimental condition, a test with pure mineral oil (MO) without the addition of Vegetable oil (VO), to determine the difference in efficiency due to the presence of the vegetable oil studied.

The invention process will be described below, with a reference to the attached Figures.

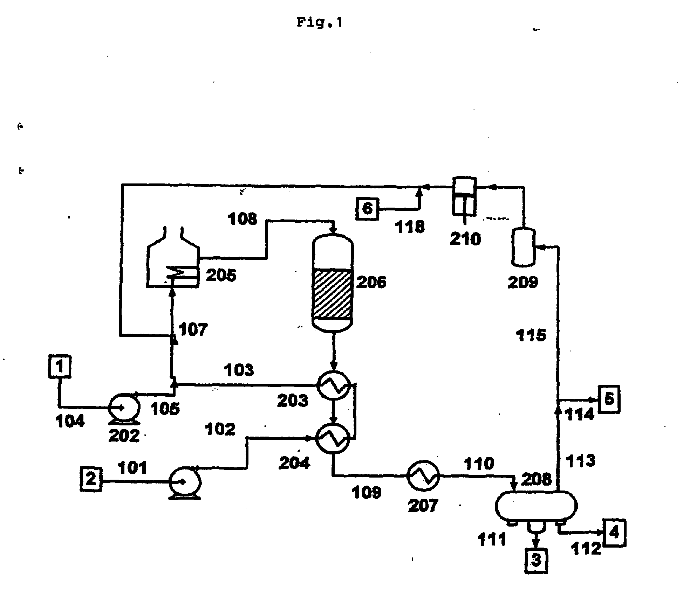

In Figure 1, the mineral oil (2) is driven via line (101) to the pump (201), which raises the flow's operational pressure, after which the oil is sent by line (102) to the set of heat exchangers (204) and (203), which heat the oil recovering heat from the process products. The heated product is pressurized and sent by line (103). The vegetable oil (1) enters the unit via line (104) and is pumped by the pump (202), which pressurizes the flow (105) to the unit's pressure. Then flow (105) is mixed with flow (103), forming flow (106), which is in turn mixed with the hydrogen rich recycle gas flow (119), starting the flow (107). Flow (107) is sent to the furnace (205), where flow (107) is heated, forming flow (108), up to the reactor's (206) inlet temperature.

The reactions are exothermic and, therefore, there is an increase in temperature along the catalytic bed, therefore the outlet product is at a higher temperature than the inlet temperature, giving rise to flow (109) where part of the heat is recovered by the exchangers (204) and (203) which heats the mineral oil (2) load. The flow (109) is cooled again, this time with cooling water, to condense the light products formed, which are separated from the gas flow in vessel (208), where a flow (111) of produced water from the process is also separated, which is sent to the refinery's sour water system (3) for treatment.

The hydrocarbon flow (112), containing the product from VO hydrocracking, is sent to the rectifier tower (not represented), where the hydrogen sulfide gas and the ammonia, produced by the HDS and HDN reactions respectively, are removed. The propane is recovered and the specified diesel (4) is sent for storage. The gas flow (113) arising from (208), is rich in non-reacted hydrogen, but may also have a high hydrogen sulfide gas content, which may prejudice the reactions. Therefore the hydrogen sulfide gas content is maintained below a minimum range by a blow down (5) flow (114). The blow down flow (115) passes vessel (209) for retaining any liquid compound that may have been carried, giving rise to flow (116) which is compressed by the compressor (210) up to the furnace (205) inlet pressure, starting flow (117). Flow (117) is mixed with flow (118), which contains pure hydrogen to compensate for the hydrogen consumed. The hydrogen rich flow (119) is then mixed with flow (106) at the furnace (205).

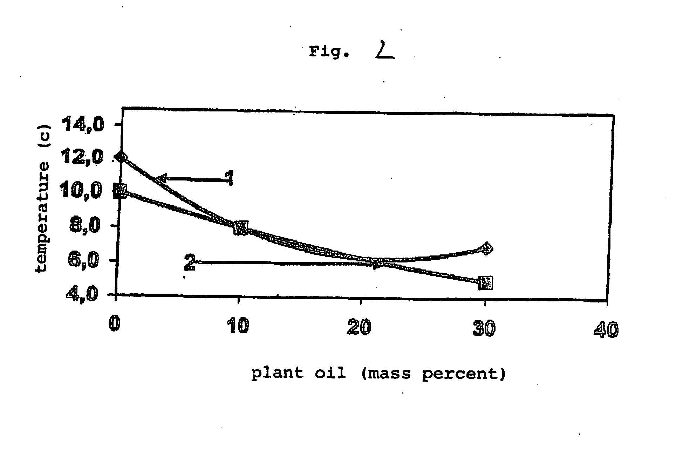

Proof of the technical viability of the proposed process will described below, based on the evaluation of the parameters, such as IQT/DCN (equivalent to the cetane number), density of the products obtained from coprocessing and temperature of the plugging point of a diesel engine, running with hydrotreated oil obtained from the invention's process.
Evaluation of the parameters is illustrated by reference to Figures 2 to 8.

### - IQT/DCN

Diesel quality is associated to its auto-ignition capability, for this purpose a device called an IQT/DCN (Ignition Quality Tester) was used, which allows the ignition quality of a fuel to be determined in accordance with ASTM D 6890-03 and IP 498/03. The results are shown in the form of the DCN (Derived Cetane Number) which is the equivalent of the CN (Cetane Number) obtained in a diesel cycle engine, as per ASTM D613.

This parameter shows that the hydrotreatment of vegetable and mineral loads brings a sharp improvement of the diesel oil's specification, as was expected by the concept of the invention, as the liquid product from the VO hydrotreatment would be basically linear hydrocarbons and, therefore, with a high IQT/DCN, so the greater the quantity of VO the higher the product's IQT/DCN. The effect of temperature, relatively reducing the IQT/DCN, can be explained by the cracking of higher paraffins into lower paraffins, which have lower IQT/DCN.

Another relevant fact is that low content with 5% results in improved sensitivity of this specification. Therefore, the processing of small quantities of VO in existing HDT unstables units requires little investment, whereas the processing of larger quantities requires a more detailed study of the unit's characteristics such as excess hydrogen, recycle compressor maximum flow rate, etc.

### - Diesel engine plugging point

One of the problems that can be caused by normal paraffins arises from their high melting point, which can lead to plugging of the engine's fuel system. Analysis of the plugging point reflects the quantity of filtered particulate formed with the lowering of the temperature, therefore the lower the plugging point is, the lower the ambient temperature is in which the vehicle can operate, making this specification extremely important, mainly if the fuel is used in geographical areas with cold climates.

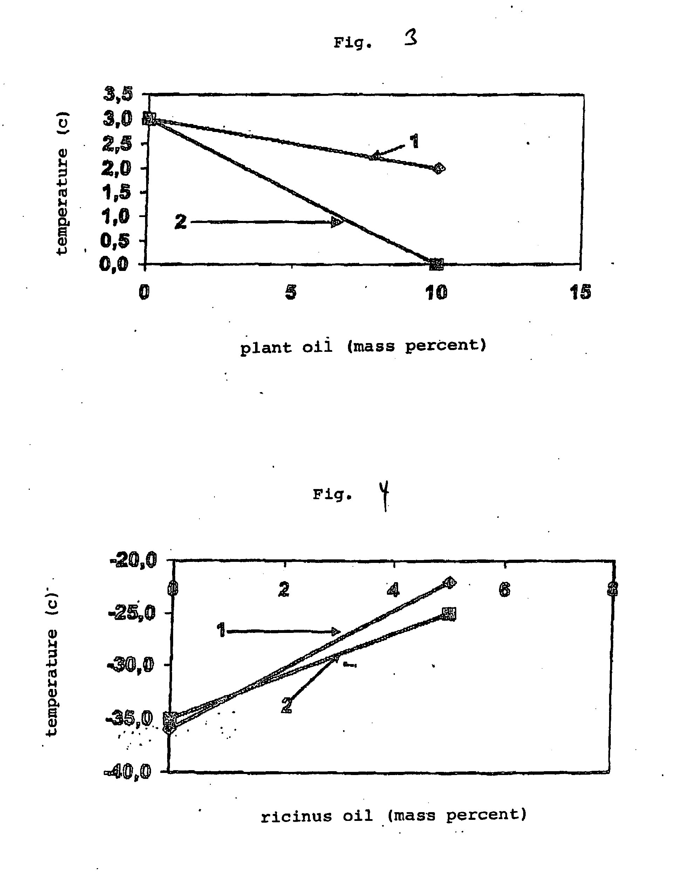

In the cases of heavy diesel (HD) and from the REPLAN load, Figures 2 and 3 respectively, as they are heavy fuels and appropriate for a country with a tropical climate, the base load has a high plugging point, and the generated paraffins may even improve the plugging point of the final product, due to the dilution effect. However, for a lighter load, similar to that used in countries with a cold climate, the effect is prejudicial, as shown by the graph in Figure 4.

### - Effect on product density

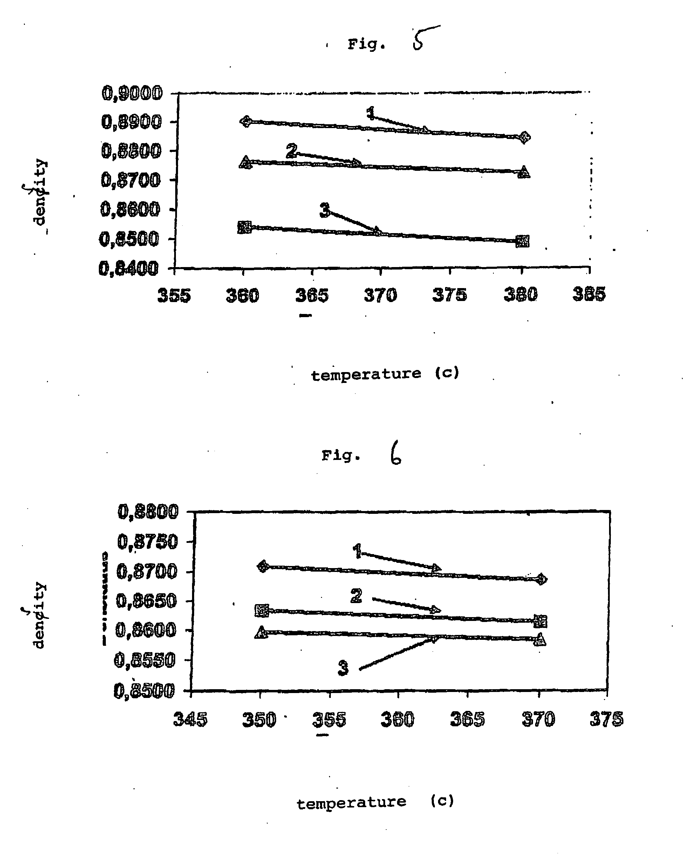

Analysis of product density reveals a very sharp decrease in density, indicating that the vegetable oil (VO) cracks producing lighter hydrocarbons than the product from hydrogenated castor oil (CO). An equivalent reduction can be seen for all loads, therefore, as shown by Figures 5, 6 and 7, there is no interference to the quality of CO with the crackability of VO.

### - LPR Analysis

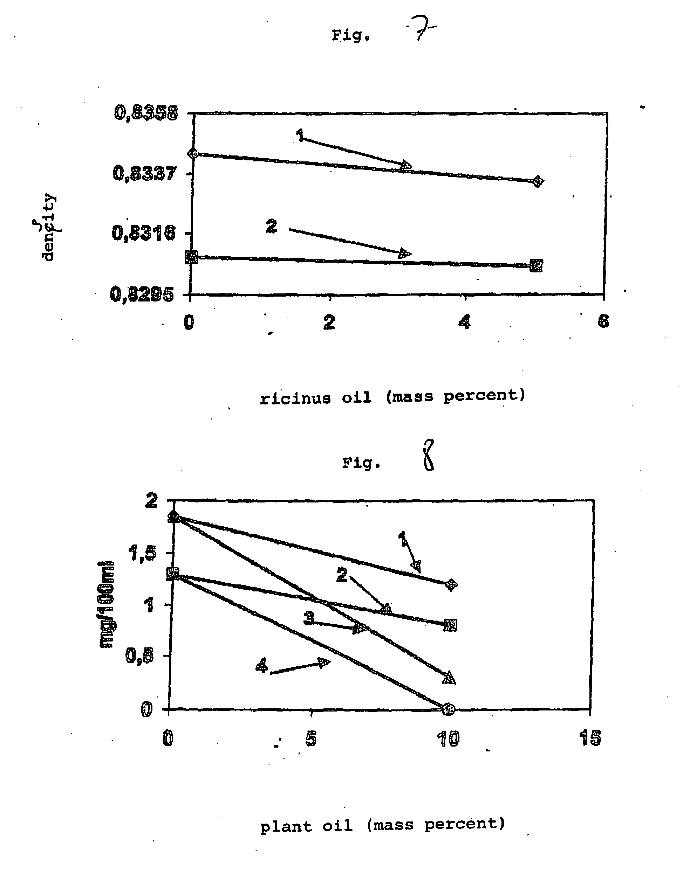

One of the big problems of using vegetable oils, even vegetable oil esters, as a fuel, is the low oxidation stability due to the presence of olefins. The HDT process not only eliminates the oxygen heteroatoms but also hydrogenates all in saturations, therefore the specification that measures stability of fuel to oxidation, LPR, is improved when compared with the base oil, with a lower insolubles content, as shown by the graph of Figure 8.

### - Volumetric efficiency

The volumetric efficiency shown by vegetable oil HDT, has an important production of propane (main component of domestic gas) and the production of one liter of diesel oil for each liter of VO processed. This fact is a consequence of the lower product density relative to the density of VO, therefore there is an increase in volumetric efficiency. Table 2 below, shows the volumetric efficiency for castor and soya oil.

**TABLE 2**

| Load | Water | Methane | Propane | Diesel |
|---|---|---|---|---|
| One Liter | Liter | Normal Liter | Normal Liter | Liter |
| Castor Oil | 0.14 | 18 | 20 | 1 |
| Soya Oil | 0.09 | 15 | 20 | 1 |

### - Product quality of other processed oils

Based on the kinetic mechanism developed from the experimental data obtained, it is possible to calculate the quality of the products obtained from processing vegetable oils other than castor and soya oil. As can be seen in Table 3 below, where the IQT/DCN values and density of the obtained products is listed. There are important differences in both the density and IQT/DCN value, indicating that the best oil to be processed depends not only on its availability and market value, but also on the refinery's objectives in particular, i.e. if the specification limitation is in the IQT/DCN or the density.

**TABLE 3**

| Analyses | Peanut oil | Babassu Oil | Palm Oil | Soya Oil | Castor Oil |
|---|---|---|---|---|---|
| IQT | 103 | 92 | 101 | 102 | 94 |
| Density | 0.7800 | 0.7644 | 0.7779 | 0.7803 | 0.7619 |

The description in this report, as well as the accompanying Figures and Tables, prove the excellence of the invention, in the sense that it presents a process where the addition of a proportion of an oil or a natural fat, to an oil hydrocarbon load in a hydrotreatment process, produces a diesel oil with various improved characteristics, as well as an environmental interest when soya oil is used. Additionally, it is possible to adjust the vegetable oil used to the refinery's objectives, in terms of the IQT and density of the product obtained.

## Claims

1. Process for the hydroconversion of vegetable oils admixed with a minimal oil, in the presence of a hydrogen flow and hydroconversion catalysts, under hydroconversion conditions to obtain diesel oil, wherein the said process is **characterized by** the following:
a) Provide a vegetable oil;
b) Provide a mineral oil;
c) In a hydroconversion reactor and in the presence of a catalyst and hydrogen flow, pressure and temperature, effect the hydroconversion of the vegetable oil admixod with a mineral oil;
d) Recover a diesel oil flow, in which:
i. The IQT/DCN of the diesel oil obtained is higher than for diesel oil obtained by the hydroconversion of the mineral oil by it self;
ii. The density of the diesel oil obtained is lower than for diesel oil obtained by the hydroconversion of the mineral oil by itself;
iii. The oxidation stability of the diesel product, as measured by LPR, is higher than for diesel oil obtained by the hydroconversion of the mineral oil by itself;
wherein said process comprises the following stages:
(a) The mineral oil (2) is pressurized by pump (201) and heated by thermal exchangers (204) and (203), obtaining a flow (103);
(b) The vegetable oil (1) is pressurized by pump (202), obtaining a flow (105);
(c) Mix the mineral oil flow (103) with the vegetable oil flow (105), in, a proportion between 1 and 75 % in mass the best being mineral food forming a flow (106) , which is then mixed with the hydrogen rich recycle gas flow (119), from which originates flow (107);
(d) Heat the flow (107) in furnace (205), forming flow (108), up to the inlet temperature of reactor (206), where hydroconversion reactions occur, in the presence of a sulfide catalyst of Group VI and Group VIII, 4 MPa to 10MPa pressure, catalytic bod average temperature from 320°C to 400°C, spatial velocity from 0.5h⁻¹ to 2h⁻¹, hydrogen load ratio varying from 200N 1 of hydrogen/load 1 to 1000N 1 of hydrogen/load 1, with exothermic reactions which raises the temperature along the catalytic bed;
(e) Obtain the product from the reactor (206) outlet at a temperature higher than the inlet temperature, as a hydrocarbon flow (109), which is cooled for the condensation of the formed light products, which are seperated from the gas flow, in vessel (208), where a gas flow (113) and a sour water flow (111) are separated from the hydrocarbon flow (112), containing the product from the hydro coating, and send it for rectification. - thus recovering specified diesel (4) as said diesel oil flow.

2. Process in accordance with claim 1, **characterized by** the vegetable oils being selected from castor, soya, peanut or palm oils, pure or mixed in any proportions.

3. Process in accordance with claim 2, **characterized by** the vegetable oil being castor oil.

4. Process in accordance with claim 2, **characterized by** the vegetable oil being soya oil.

5. Process in accordance with any one of the preceding claims, **characterized by** the vegetable oil being mixed with animal fat in any proportion.

6. Process in accordance with claim 1, **characterized by** the hydrocarbon oil being selected among heavy, diesel oil, light diesel oil or a mixture of flows such as LCO and/or coking process gasoil.

## Patentansprüche

1. Verfahren zur Hydrokonversion von pflanzlichen Ölen, das vermengt ist mit einem Mineralöl, in Anwesenheit eines Wasserstoffstromes und Hydrokonversions-Katalysatoren unter Hydrokonversionsbedingungen, um Dieselöl zu erhalten, wobei das Verfahren durch Folgendes charakterisiert ist:
a) Bereitstellen eines pflanzlichen Öls;
b) Bereitstellen eines Mineralöls;
c) Bewirken der Hydrokonversion des pflanzlichen Öls, welches mit einem Mineralöl vermengt ist, in einem Hydrokonversionsreaktor und in Gegenwart eines Katalysators und eines Wasserstoffstromes, unter geeignetem Druck und Temperatur;
d) Rückgewinnen eines Dieselöl-Stromes, in welchem:
i. der IQT/DCN-Wert des erhaltenen Dieselöls höher ist als der von Dieselöl, welches durch die Hydrokonversion des Mineralöls selbst erhalten wird;
ii. die Dichte des erhaltenen Dieselöls niedriger ist als die des Dieselöls, welches durch die Hydrokonversion des Mineralöls selbst erhalten wird;
iii. die Oxidationsstabilität des Dieselprodukts, die durch LPR gemessen wurde, höher ist als die des Dieselöls, welches durch die Hydrokonversion des Mineralöls selbst erhalten wird;
wobei das Verfahren folgende Arbeitsschritte umfasst:
(a) das Mineralöl (2) wird durch die Pumpe (201) unter Druck gesetzt und durch die Wärmeaustauscher (204) und (203) erhitzt, wobei ein Strom (103) erhalten wird;
(b) das pflanzliche Öl (1) wird durch die Pumpe (202) unter Druck gesetzt, wobei ein Strom (105) erhalten wird;
(c) Mischen des Mineralölstromes (103) mit dem pflanzlichen Öl-Strom (105) in einem Verhältnis zwischen 1 und 75 Massenprozent, wobei der Rest Mineralladung ist, wobei ein Strom (106) gebildet wird, welcher dann mit dem wasserstoffreichen Recycle-Gas-Strom (119) gemischt wird, wodurch der Strom (107) entsteht;
(d) Erhitzen des Stromes (107) im Ofen (205) unter Bildung des Stromes (108) bis zur Einlasstemperatur des Reaktors (206), wo die Hydrokonversionsreaktionen stattfinden, in Anwesenheit eines Sulfidkatalysators der VI. und VIII. Gruppe bei einem Druck von 4Mpa bis 10 Mpa, einer durchschnittlichen Temperatur des Katalysatorbetts von 320°C bis 400°C, einer Raumgeschwindigkeit von 0,5 h⁻¹ bis 2 h⁻¹, einem Wasserstoffladungsverhältnis zwischen 200 N 1 von Wasserstoff/Ladung 1 bis 1000 N 1 von Wasserstoff/Ladung 1, mit exothermen Reaktionen, welche die Temperatur entlang dem Katalysatorbett erhöhen;
(e) Erhalten des Produkts von dem Reaktor (206) -auslass bei einer Temperatur, welche höher ist als die Einlasstemperatur, als ein Kohlenwasserstoffstrom (109), welcher zur Kondensation der gebildeten Leichtprodukte, die von dem Gasstrom getrennt werden, im Gefäß (208) heruntergekühlt wird, wo ein Gasstrom (113) und ein saurer Wasserstrom (111) von dem Kohlenwasserstoffstrom (112), welcher das Produkt aus dem VO-Hydrocracking enthält, getrennt werden, und Leiten desselben zur Rektifikation, wobei so der spezifizierte Diesel (4) als der Dieselölstrom zurückgewonnen wird.

2. Verfahren gemäß Anspruch 1, **dadurch gekennzeichnet, dass** das pflanzliche Öl ausgewählt ist aus Rizinus-, Soja-, Erdnuss- oder Palmölen, rein oder gemischt in jeglichen Verhältnissen.

3. Verfahren nach Anspruch 2, **dadurch gekennzeichnet, dass** das pflanzliche Öl Rizinusöl ist.

4. Verfahren nach Anspruch 2, **dadurch gekennzeichnet, dass** das pflanzliche Öl Sojaöl ist.

5. Verfahren nach einem der vorhergehenden Ansprüche, **dadurch gekennzeichnet, dass** das pflanzliche Öl mit tierischem Fett in jeglichen Verhältnissen gemischt ist.

6. Verfahren nach Anspruch 1, **dadurch gekennzeichnet, dass** das Kohlenwasserstofföl ausgewählt ist aus schwerem Dieselöl, leichtem Dieselöl oder einer Mischung aus Strömen, wie beispielsweise LCO und/oder Gasöl aus Verkokungsprozessen.

## Revendications

1. Procédé pour l'hydroconversion d'huiles végétales mêlées à une huile minérale, en présence d'un flux d'hydrogène et de catalyseurs d'hydroconversion, dans des conditions de d'hydroconversion pour obtenir du gasoil, ledit procédé étant **caractérisé par** ce qui suit :
a) Fournir une huile végétale ;
b) Fournir une huile minérale ;
c) Dans un réacteur d'hydroconversion et en présence d'un catalyseur et un flux d'hydrogène, pression et température, effectuer l'hydroconversion de l'huile végétale mêlée à une huile végétale ;
d) Obtenir un gasoil, dans lequel :
i. Le IQT/DCN du gasoil obtenu est plus grand que pour le gasoil obtenu par l'hydroconversion de l'huile minérale seule ;
ii. La densité du gasoil obtenu est plus petite que pour le gasoil obtenu par l'hydroconversion de l'huile minérale seule ;
iii. La stabilité à l'oxydation du produit gasoil, telle que mesurée par LPR, est plus grande que pour le gasoil obtenu par l'hydroconversion de l'huile minérale seule ;
ledit procédé comprenant les étapes suivantes :
a) L'huile minérale (2) est pressurisée par une pompe (201) et chauffée par des échangeurs thermiques (204) et (203), obtenant un flux (103),
b) L'huile végétale (1) est pressurisée par une pompe (202), obtenant un flux (105) ;
c) Mélanger le flux (103) d'huile minérale avec le flux (105) d'huile végétale, dans une proportion entre 1 et 75% en masse le reste étant une charge minérale, formant un flux (106), qui est alors mélangé avec le flux gazeux de recyclage riche en hydrogène (119), duquel provient un flux (107) ;
d) Chauffer le flux (107) dans un four (205), formant un flux (108), à la température de l'entrée d'un réacteur (206), où les réactions d'hydroconversion ont lieu, en présence d'un catalyseur à sulfure de Groupe VI et Groupe VIII, une pression de 4MPa à 10MPa, une température moyenne du lit catalytique de 320°C à 400°C, une vitesse spatiale de 0.5h⁻¹ à 2h⁻¹, une proportion de charge d'hydrogène variant de 200N I d'hydrogène/charge I à 1000N I d'hydrogène/charge I, avec des réactions exothermiques qui élèvent la température le long du lit catalytique ;
e) Obtenir le produit à la sortie du réacteur (206) à une température plus grande que la température de l'entrée, sous la forme d'un flux (109) d'hydrocarbure, qui est refroidit pour la condensation des produits légers formés, qui sont séparés du flux gazeux dans un réceptacle (208), où un flux gazeux (113) et un flux d'eau aigre (111) sont séparés d'un flux (112) d'hydrocarbure, contenant le produit de l'hydrocraking d'huile végétale (VO), l'envoyer pour rectification, obtenant ainsi le diesel (4) spécifié en tant que flux de gasoil.

2. Procédé selon la revendication 1, **caractérisé en ce que** les huiles végétales sont sélectionnées parmi les huiles de ricin, de soja, d'arachide ou de palme, pure ou mélangées dans n'importe quelle proportion.

3. Procédé selon la revendication 2, **caractérisé en ce que** l'huile végétale est de l'huile de ricin.

4. Procédé selon la revendication 2, **caractérisé en ce que** l'huile végétale est de l'huile de soja.

5. Procédé selon l'une quelconque des revendications précédentes, **caractérisé en ce que** l'huile végétale est mélangée avec de la graisse animale dans n'importe quelle proportion.

6. Procédé selon la revendication 1, **caractérisé en ce que** l'huile d'hydrocarbure est sélectionnée parmi du gasoil lourd, du gasoil léger, ou un mélange de flux tels que LCO et/ou gasoil de procédé de cokéfaction.
